# EUROPÄISCHE PATENTSCHRIFT

(11) **EP 0 628 399 B1**
(45) Veröffentlichungstag und Bekanntmachung des Hinweises auf die Patenterteilung: **02.08.2000**
(21) Anmeldenummer: 94810269.4
(22) Anmeldetag: 06.05.1994
(51) Int. Cl.: B29C 53/42, B29C 65/32, B29L 23/22, B29L 23/20, B29L 9/00

(54) **Verfahren zur Herstellung eines rohrförmigen Hohlkörpers**
Process for making a hollow tubular article
Procédé pour la fabrication d'un corps creux tubulaire

(30) Priorität: 07.05.1993 CH 141293
(43) Veröffentlichungstag der Anmeldung: 14.12.1994
(73) Patentinhaber: KMK LIZENCE LTD., Chaussée, Port Louis (MU)
(72) Erfinder: Scheifele, Fredy, CH-8340 Hinwil (CH)
(74) Vertreter: Peege, Klaus

(56) Entgegenhaltungen:
- EP-A- 0 409 021
- WO-A-88/02690
- FR-A- 1 566 693
- FR-A- 2 366 923
- GB-A- 1 468 262

## Beschreibung

Die Erfindung betrifft ein Verfahren zur Herstellung eines rohrförmigen Hohlkörpers nach dem Oberbegriff des Patentanspruches 1.

Rohrkörper oder Rohrstücke für Verpackungsbehälter aus thermoplastischen Folien mit metallischer Barriereschicht, insbesondere Verpackungstuben, werden - neben anderen im Zusammenhang mit der vorliegenden Erfindung nicht interessierenden Fertigungsmethoden - durch Umformung einer zunächst flach liegenden Folie zu einem Rohr, Uebereinanderlegen zweier sich gegenüberliegender Folienrandabschnitte zu einem Ueberlappungsbereich mit anschliessender Verschweissung der Folienrandabschnitte zu einer Längsschweissnaht hergestellt. Es ist bekannt, dieses Verfahren in zwei Varianten zu praktizieren, nämlich in einem diskontiniuerlichen und einem kontinuierlichen Verfahren. Bei dem diskontinuierlichen Verfahren wird von einem die Abwicklung eines Rohrkörpers entsprechenden Zuschnitt ausgegangen, es werden also Einzelrohrkörper hergestellt, während bei dem kontinuierlichen Verfahren aus einem laufenden Folienband ein "Endlos-Rohrkörper" geformt wird, der entsprechend der gewünschten Rohrkörperlänge vereinzelt wird. Die Erfindung, wie nachfolgend dargelegt, betrifft das diskontinuierlich ablaufende Verfahren.

Bei einem Verfahren letzterer Art erfolgt die Verschweissung durch Wärme und Druck, indem eine Schweiss-Kühlbacke den Ueberlappungsbereich auf ein Widerlager in Form eines Dornes, um den der Zuschnitt zu einem Rohr gebogen ist, drückt und die Folie erwärmt, so dass aufeinanderliegende thermoplastische Kunststoffschichten aufschmelzen und ineinanderfliessen. Bei diesem Verfahren erzeugt und überträgt die Schweiss-Kühlbacke selbst keine Wärme zur Aufschmelzung der Kunststoffschichten. Sie ist mit der Spule einer Hochfrequenzschweisseinrichtung ausgestattet, die in der im Zuschnitt enthaltenen metallischen Barriereschicht die notwendige Schweisswärme zur Aufschmelzung und Verschweissung der Kunststoffschichten erzeugt. Ist die Verschweissung durch Wärme und Druck erfolgt, wird das hochfrequente Feld abgestellt, die Naht vermittels der Backe (Schweiss-Kühlbacke) bis zu ihrer Verfestigung gekühlt.

Das bekannte Verfahren stützt sich auf die Wärmeerzeugung in der Folie zur Aufschmelzung der zu vereinigenden Kunststoffschichten ab, was zur Durchführung des bekannten Verfahrens, wie bereits erwähnt, Folien mit einer beidseits mit einer Kunststoffschicht beplankten Metallschicht voraussetzt. Zusätzlich zur Wärmeerzeugung erfüllt die Metallschicht eine Barrierefunktion, indem sie die Diffusion von Packstoffkomponenten von innen nach aussen und Sauerstoffdurchtritt von aussen in das Innere der Tube ausschliesst. Tubenrohre mit Diffusionssperre sind unabdingbar für hochwertige, empfindliche Packgüter, die Diffusionssperre ist jedoch entbehrlich für nicht empfindliche Packgüter. Folien mit metallischer Barriere sind relativ kostspielig, so dass für nicht empfindliche Packgüter, für die reine Kunststoffrohre genügen würden, ein unnötiger Kostenaufwand hinzunehmen ist, worin ein Nachteil des bekannten Verfahrens gesehen wird. In neuerer Zeit sind nicht zuletzt als ökologischer Sicht als Ersatz zu den Metall-Kunststoff-Laminaten zur Herstellung von Verpackungsbehältern sogenannte PBL-Folien (P für Plasik, B für Barriere, L für Laminat) entwickelt worden. Die bekannte metallische Barriere ist bei diesen Vollkunststoff-Laminaten durch eine Kunststoff-Barriere, beispielsweise eine Folie aus PET (Polyethylentherephthalat) oder durch eine SIOₓ beschichtete ersetzt, wobei die Barriereschichten beidseits beispielsweise mit Polyethylen heschichtet sind. Ein weiterer Nachteil des bekannten Verfahrens liegt darin, dass es zur Verarbeitung dieser neuen Verpackungsfolien - zufolge des Fehlens einer anregungsfähigen Wärmequelle in den neuen Folien - nicht geeignet ist. Neben den vorstehend dargestellten Nachteilen ist das bekannte Verfahren ansonsten technisch zu einem hohen Stand gebracht, ausgereift und hat in seiner Anwendung deshalb eine weite Verbreitung gefunden, dies als Vorteile des Verfahrens.

Aus der FR PS 1 566 693 ist eine Schweisseinrichtung zur sogenannten Verschlussschweissung von Beuteln und dgl. Behältnisse aus Kunststoff-Folien bekannt. Die bekannte Schweisseinrichtung weist zwei Schweissbacken mit je einem Induktor auf, die an einen Hochfrequenzgenerator angeschlossen sind. Dabei wird jede Backe direkt aktiviert. Diese Art der Aktivierung ergibt im Vergleich zur erfindungsgemässen Aktivierung Schweissnähte deutlich schlechterer Festigkeit und optischer Erscheinung.

Aufgabe der vorliegenden Erfindung ist es, das bekannte Verfahren soweit zu verbessern, dass die Nachteile eliminiert, die Vorteile jedoch erhalten sind, und die Aufgabe wird vermittels der kennzeichnenden Merkmale des Anspruches 1 gelöst.

Die Erfindung verlässt die technische Lehre, die zur Verschweissung notwendige Wärme durch Schwingungsanregung einer metallischen Schichtung in der Folie zu erzeugen und wendet sich der Aufschmelzung der thermoplastischen Schichten durch Wärmezufuhr von aussen zu, wobei dieses Prinzip für Verbundfolien oder Laminate ohne metallische Barriereschicht und auch für Laminate mit metallischer Barriereschicht anwendbar ist, wenn in letzterem Fall keine Wärmequelle im Inneren eines Rohres erzeugt wird, was ohne grostechnischen Aufwand bei der Durchführung des erfindungsgemässen Verfahrens möglich ist (Ersatz eines Metallbandes durch Kunststoffband auf einem Dorn). Der Nachteil der auf Kunststoff/Metall-Laminate beschränkten Anwendbarkeit des bekannten Verfahrens ist damit aufgehoben. Mit Aufteilung der zugeführten Energie in zwei (ein oberes, ein unteres Feld) wird es möglich, unterschiedliche Wärmemengen in den äusseren und inneren Randabschnitt einzutragen, womit Einfluss auf Festigkeit und Erscheinungsform einer Schweissnaht genommen werden kann. Weitere vorteilhafte Ausgestaltungen des erfindungsgemässen Verfahrens sind vermittels der dem Anspruch 1 folgenden Ansprüche gekennzeichnet.

Weitere Vorteile, Merkmale und Einzelheiten der Erfindung ergeben sich aus der folgenden Beschreibung einer bevorzugten Vorrichtung zur Durchführung des Verfahrens und der Zeichnung; es zeigen:
- Fig. 1:: Eine Vorrichtung zur Durchführung des Verfahrens in Arbeitsstellung in Vorderansicht im Schnitt; und
- Fig. 2: eine Einzelheit bei A, d.h. eine vergrösserte Darstellung einer Schweiss-Kühlbacke und eines Dornes in Vorderansicht im Schnitt mit Folie, die Schweiss-Kühlbacke in Auffahrtstellung.

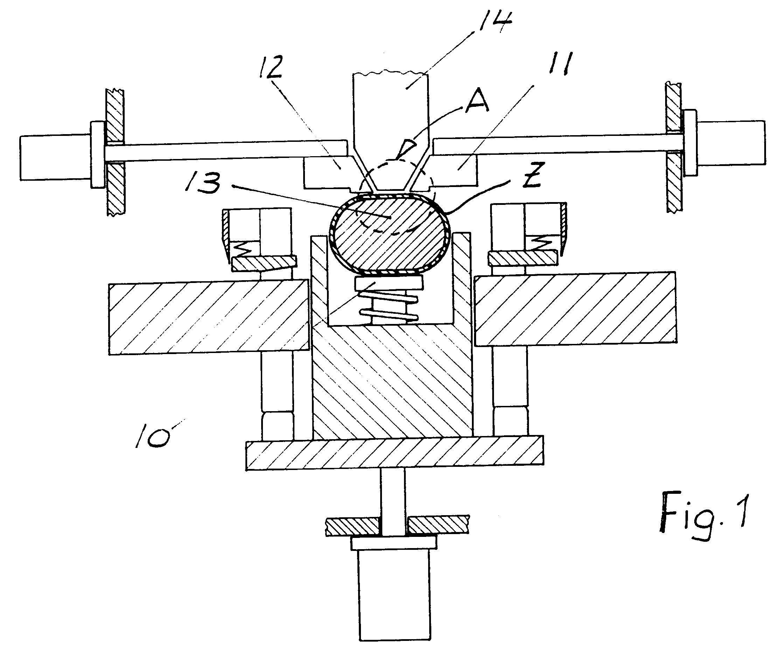

Fig. 1 zeigt eine Vorrichtung 9 zur Durchführung des erfindungsgemässen Verfahrens in Vorderansicht und im Schnitt. Ein Zuschnitt Z wird über eine Klemmleiste 10 und zwei Niederhalter 11, 12 um einen Dorn 13 gewickelt gehalten. Oberhalb des Dornes 13 ist eine Schweiss-Kühlbacke 14 vorgesehen. Die Technik der Umwicklung des Dornes 13 mit dem Zuschnitt Z, die Beladung der Vorrichtung 9 mit einem Zuschnitt Z und Entladung von einem Tubenrohr ist für das Verständnis der Erfindung nicht wesentlich, so dass von einer Beschreibung der Funktionsweise der Vorrichtung 9 Abstand genommen werden kann.

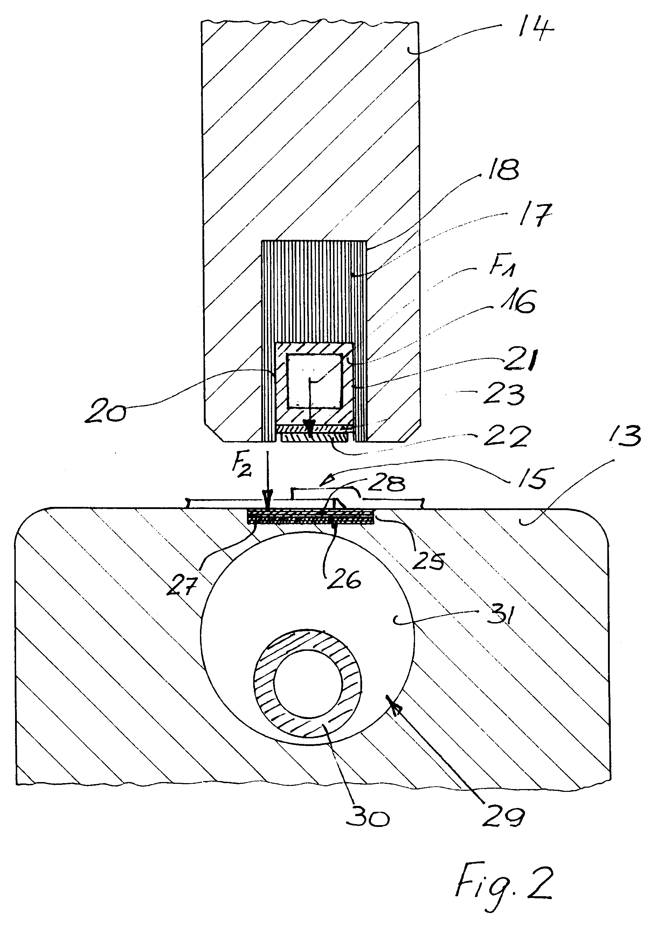

Gemäss Fig. 2, die als Vergrösserung den Bereich A in Fig. 1 zeigt, ist die Schweiss-Kühlbacke 14, die wie der Dorn 13 in Längsrichtung eines Tubenrohres verläuft - aus Gründen der Uebersichtlichkeit ist nur der Ueberlappungsbereich 15 eines Tubenrohres dargestellt - mit einer mittels elektrischem Strom anregbaren Hochfrequenzspule 16 an ihrem dem Dorn 13 zugewandten Ende versehen, die sich in gleicher Länge und Richtung wie die Schweiss-Kühlbacke 14 erstreckt. Die Spule 16 ist in einem Kern 17 aus Ferrit (Ferritkern 17) aufgenommen, der sich ebenfalls in gleicher Länge und Richtung wie die Schweiss-Kühlbacke 14 erstreckt. Der Ferritkern 17 - selbst nach unten offen - ist in einem nach unten offenen (nach unten offen bedeutet in Richtung auf den Dorn 13 offen) Schlitz 18 des Dornes 13 aufgenommen. Zwei sich gegenüberliegende Seiten der ansonsten im Querschnitt quadratischen Spule 16 liegen an Innenwandungen 20, 21 des Schlitzes des Ferritkernes 17 an. Zweck des Ferritkernes 17 ist, dass durch die Spule 16 bei Stromdurchfluss erzeugte Feld (Feldlinien desselben) in eine bestimmte Richtung und zwar in Richtung auf den Dorn 13 zu lenken. Im unten offenen Ende des Schlitzes des Ferritkernes 17 ist ein der Längserstreckung der Schweiss-Kühlbacke 14 entsprechendes Metallband 22 vorgesehen, wobei zwischen Metallband 22, vorzugsweise aus Kupfer, und einer Seite der Spule 16 eine Isolationsschicht 23 eingebracht ist. Die Spule 16 ist hohl und wird von einem Kühlmittel, beispielsweise Wasser durchflossen.

Der Dorn 13 aus Metall weist eine nach oben (nach oben bedeutet in Richtung auf den Schweiss-Kühlbalken 14) offene, rinnenförmige, im Querschnitt vorzugsweise rechteckige Ausnehmung 25 auf, die sich in gleicher Richtung und gleicher Länge wie der Schlitz 18 des Dornes 13 mit Ferritkern 17 und Spule 16 erstreckt und symetrisch zum Schlitz 17 angeordnet ist. Die Ausnehmung 25 trägt auf ihrem Boden 26 eine Isolationsschicht 27, auf der ein unteres Metallband 28, vorzugsweise aus Kupfer angeordnet ist. Der Dorn 13 weist eine Kühlung 29 auf, bestehend aus einer Kühlmittelkammer 31, die von einem Kühlmittelrohr 30 gespeist wird, wobei das Kühlmedium, vorzugsweise Wasser, aus der Kühlmittelkammer abgeleitet wird.

Zur Verschweissung des Ueberlappungsbereiches 15 wird der Spule 16 Strom zugeleitet. Auf Grund der erfindungsgemässen Ausbildung der Schweiss-Kühlbacke 14 und des Dornes wird zur Durchführung des erfindungsgemässen Verfahrens das durch die Zuleitung des Stromes zur Spule 16 entstehende hochfrequente Feld in zwei Einzelfelder F₁ (oberes) F₂ (unteres) aufgeteilt, wobei Feld F₁ das obere Metallband 22 und Feld F₂ das untere Metallband 28 aufheizt. Mit den aufgeheizten Metallbändern 22, 20 werden die mit den Beändern in Eingriff stehenden Folienrandabschnitte aufgeschmolzen und in diesem Zustand durch Niederfahren des Schweiss-Kühlbackens 14, d.h. Ausübung von Druck auf den Ueberlappungsbereich 15 verpresst. Nach Stromabschaltung und Kühlung der jetzt gebildeten Naht fährt der Schweiss-Kühlbalken 14 aufwärts und gibt das Rohr zur Entladung von dem Dorn 13 frei.

Um das erfindungsgemässe Verfahren an eine Vielzahl von Kunststofflaminaten verschiedener technischer Eigenschaften anpassen zu können, ist die Schweisszeit, d.h. die Zeit zur Aufschmelzung und Verpressung einstellbar, indem die Dauer des Stromdurchflusses durch die Spule 16 einstellbar ist. Der Pressdruck des Schweiss-Kühlbackens 14 ist entsprechend erforderlicher Nahtdicke variabel, und die mit dem erfindungsgemässen Verfahren erreichbare Schweissleistung ist einstellbar vermittels der Stromstärke und Dauer der Stromzuführung.

Die Temperaturen des oberen Metallbandes 22 und unteren Metallbandes 28 können zur Anpassung des erfindungsgemässen Verfahrens an bestimmte Nahtformen und Kunststoffe unterschiedlich eingestellt werden. Dies kann über die Geometrie (Breite, Dicke) der Bänder erfolgen. Beispielsweie gilt, dass mit abnehmender Breite des oberen Metallbandes 22 das untere Metallband bei gleichbleibender Breite stärker aufgeheizt wird.

Tubenrohre aus Kunststoff-Metall-Laminaten zeichnen sich auf Grund des derzeit herrschenden hoben Entwicklungsniveaus durch fast nicht sichtbare Schweissnähte aus. Schweissnähte vergleichbarer optischer Qualifikation waren trotz aller Entwicklungsanstrengungen bisan nicht erreichbar. Mit dem erfindungsgemässen Verfahren werden bei reinen Kunststoff- oder Kunststofflaminattuben nunmehr Nähte gleicher Festigkeit und optischer Qualifikation wie die der Kunststoff-Metall-Laminattuben herstellbar.

## Patentansprüche

1. Verfahren zur Herstellung eines rohrförmigen Hohlkörpers aus einer Kunststoff-Folie aus einem den Hohlkörper in seiner Abwicklung darstellenden Zuschnittes (Z), dessen überlappenden Ränder vermittels eines hochfrequenten Feldes aufgeschmolzen, in aufgeschmolzenem Zustand unter Anwendung von Druck verpresst und anschliessend gekühlt werden, dadurch gekennzeichnet, dass das hochfrequente Feld auf ein auf die Oberseite der Überlappung (15) einwirkendes Feld (F₁) und ein auf die Unterseite der Überlappung (15) einwirkendes Feld (F₂) aufgeteilt wird.

2. Verfahren nach Anspruch 1, dadurch gekennzeichnet, dass die Felder (F₁, F₂) zur Aufschmelzung der Ober-und Unterseite der Ueberlappung (15) in ein sich erwärmendes oberes Metallband (22) und ein sich erwärmendes unteres Metallband (28) eingeleitet werden.

3. Verfahren nach Anspruch 1 oder 2, dadurch gekennzeichnet, dass durch entsprechende Bemessung der Felder (F1,F2) die Metallbänder (22,28) unterschiedlich stark aufgeheizt werden.

4. Verfahren nach Anspruch 3, dadurch gekennzeichnet, dass durch Verkleinerung der Breite des oberen Metallbandes (22) bei gleichbleibender Breite des unteren Metallbandes (28) mehr Energie in das untere Metallband eingetragen wird.

## Claims

1. A process for the production of a tubular hollow body of a plastic foil from a blank which represents the hollow body in its geometrical development and whose overlapping edges are fused by means of a high-frequency field, pressed in the fused condition by the application of pressure, and then cooled, characterised in that the high-frequency field is divided into a field (F1) which acts on the top side of the overlap (15) at a field (F2) which acts on the underside of the overlap (15).

2. A process according to claim 1 characterised in that for fusing of the top side and underside of the overlap (15), the fields (F1, F2) are introduced into an upper metal strip (22) which heats up and a lower metal strip (28) which heats up.

3. A process according to claim 1 or claim 2 characterised in that the metal strips (22, 28) are heated up to different levels by suitable allocation of the fields (F1, F2).

4. A process according to claim 3 characterised in that, by reducing the width of the upper metal strip (22), while the width of the lower metal strip (28) remains the same, more energy is introduced into the lower metal strip.

## Revendications

1. Procédé de fabrication d'un corps creux tubulaire à partir d'un film en matière plastique à partir d'une pièce découpée (Z) représentant la projection développée du corps creux et dont les bordures chevauchantes sont fondues à l'aide d'un champ à haute fréquence, comprimées à l'état fondu en appliquant une pression puis refroidies, caractérisé en ce que le champ à haute fréquence est divisé en un champ (F₁) agissant sur la face supérieure du chevauchement (15) et en un champ (F₂) agissant sur la face inférieure du chevauchement (15).

2. Procédé selon la revendication 1, caractérisé en ce que les champs (F₁, F₂) pour faire fondre les faces supérieure et inférieure du chevauchement (15) sont introduits dans une bande métallique chauffante supérieure (22) et dans une bande métallique chauffante (28) inférieure.

3. Procédé selon la revendication 1 ou 2, caractérisé en ce que grâce à un dimensionnement approprié des champs (F₁, F₂) le degré d'échauffement des bandes métalliques (22, 28) est différent.

4. Procédé selon la revendication 3, caractérisé en ce qu'en rétrécissant la largeur de la bande métallique supérieure (22) la bande métallique inférieure (28), dont la largeur reste inchangée, reçoit d'avantage d'énergie.
